# EUROPÄISCHE PATENTSCHRIFT

(11) **EP 4 002 595 B1**
(45) Veröffentlichungstag und Bekanntmachung des Hinweises auf die Patenterteilung: **25.03.2026**
(21) Anmeldenummer: 21206197.2
(22) Anmeldetag: 03.11.2021
(51) Int. Cl.: H01R 4/64, H01R 11/05, H01R 11/09, H01R 11/32, H01R 4/34, H01R 9/05, H01R 4/18, H01R 11/12, H01R 101/00, H01R 4/30

(54) **ERDUNGSSCHELLE MIT SEITLICHEM VERDREHSCHUTZ**
GROUNDING CLAMP WITH LATERAL PROTECTION AGAINST TWISTING
COLLIER DE MISE À LA TERRE POURVU DE PROTECTION LATÉRALE CONTRE LA ROTATION

(30) Priorität: 19.11.2020 DE 202020106633 U
(43) Veröffentlichungstag der Anmeldung: 25.05.2022
(73) Patentinhaber: MD ELEKTRONIK GmbH, 84478 Waldkraiburg (DE)
(72) Erfinder: Bajic, Marijela, 84478 Waldkraiburg (DE); Huber, Markus, 83527 Kirchdorf (DE); Huber, Hubert, 83527 Kirchdorf (DE); Wörz, Christoph, 84539 Ampfing (DE)

(56) Entgegenhaltungen:
- EP-B1- 1 863 129
- DE-A1- 102015 205 276
- DE-A1- 102016 223 522
- DE-T5- 112014 002 495
- JP-A- 2003 187 884
- US-A1- 2017 155 200

## Beschreibung

### Technisches Gebiet

Die vorliegende Erfindung betrifft eine Erdungsschelle zum Befestigen und elektrischen Kontaktieren von zwei Kabeln an einer separaten Oberfläche.

### Stand der Technik

Erdungsschellen werden in der Automobilindustrie verwendet, um elektrische Leitungen bzw. Kabel in einem Fahrzeug an bestimmten Stellen zu fixieren und die Masseleitung eines Kabels mit der Fahrzeugkarosserie zu verbinden, d.h. zu erden. Kabel, die in einem Fahrzeug verlegt werden, sind z.B. Antennenleitungen für ein Antennenradio, und können Koaxialkabel sein. Durch die Fixierung wird das Kabel auf einem vorbestimmten Pfad durch das Fahrzeug verlegt. Die Verbindung der Masseleitung des Kabels mit der Fahrzeugkarosserie, die elektrisch leitend ist bzw. sein muss, legt das Potential der Masseleitung auf das Massepotential der Karosserie, und erdet somit die Leitung.

In bisherigen Anwendungen wurde für die Fixierung von zwei, insbesondere parallel verlaufenden, Kabeln für jedes Kabel eine einzelne Erdungsschelle verwendet, wobei die beiden Erdungsschellen bei der Montage in dem Fahrzeug ineinandergesteckt wurden. Durch die Verwendung von zwei einzelnen Erdungsschellen erhöhte sich jedoch die Komplexität bei der Montage der Leitungssätze in einem Fahrzeug.

Die Druckschrift DE 10 2006 008 056 B4 beschreibt eine Erdungsplatte zum Fixieren und Erden von Koaxialkabeln. Die Erdungsplatte weist zumindest eine Platte auf, an deren einem Ende zwei Koaxialkabel aufgenommen werden können. Beabstandet von dem Aufnahmebereich der Koaxialkabel weist die Platte ein Schraubenloch auf, durch das eine Schraube geführt wird, um die Erdungsplatte zu fixieren. Treten an der Erdungsplatte Drehmomente auf, z.B. aufgrund von Zugkräften an den Kabeln, so kann die Schraubenverbindung an dem Schraubenloch ungewollt gelockert bzw. gelöst werden.

Die Druckschrift DE 10 2015 205 276 A1 betrifft einen Erdungsanschluss mit einem ersten Erdungsanschluss, sowie einem zweiten Erdungsanschluss. In einem zusammengebauten Zustand sind der erste Erdungsanschluss und der zweite Erdungsanschluss übereinander angeordnet.

Die Druckschrift JP 2003 187 884 A betrifft ein Erdungsanschlussstück, das durch eine Basis mit einem in der Mitte ausgebildeten Bolzenloch gebildet wird. Dabei erstreckt sich ein Drahthalteteil an einem Ende, mit dem Basisteil als Zentrum, und ein Anti-Rotationsvorsprung erstreckt sich an einem anderen Ende.

Die Druckschrift DE 11 2014 002 495 T5 betrifft eine Verbindungsstruktur für Metallklemmenanschlussstücke. Die Verbindungsstruktur für Metallklemmenanschlussstücke beinhaltet ein erstes Metallklemmenanschlussstück, mit dem eine Vielzahl von ersten Elektrodrähten verbunden ist, und ein zweites Metallklemmenanschlussstück, mit dem eine Vielzahl von zweiten Elektrodrähten verbunden ist, wobei eines aus dem ersten Metallklemmenanschlussstück und dem zweiten Metallklemmenanschlussstück eine Verbindung und Fixierung mit ausschließlich einem entsprechenden Anschlussklemmen-Verbindungsabschnitt oder einem Masseabschnitt entsprechend der Anzahl der ersten Elektrodrähte und der Anzahl der zweiten Elektrodrähte ermöglicht.

Die Druckschrift EP 1 863 129 B1 betrifft eine Erdungsklemme für geschirmte Kabel und ein Verfahren zu deren Montage. Die Erdungsklemme ist aus zumindest zwei Teilen aufgebaut. Dementsprechend kann die Erdungsklemme zunächst auf oder an den jeweiligen geschirmten Kabeln angebracht werden.

Der genannte Stand der Technik weist zumindest die bereits erwähnten Nachteile auf, dass mehrere Bauteile an einer Erdungsschelle verwendet werden, und/oder dass ein Anschlussbereich von Kabeln oder Drähten immer beabstandet zu einer Befestigungsvorrichtung angeordnet ist, so dass ungewollte Drehmomente an der Erdungsschelle wirken können, die zu einem Lockern oder Lösen der Befestigung führen.

### Beschreibung der Erfindung

Es ist daher eine Aufgabe der vorliegenden Erfindung eine Erdungsschelle bereitzustellen, die im montierten Zustand gegen ein ungewolltes Verdrehen geschützt ist und eine deutlich sichtbare Orientierung aufweist.

Die oben genannte Aufgabe wird durch eine Erdungsschelle mit den Merkmalen des Anspruchs 1 gelöst. Weitere vorteilhafte Ausgestaltungsformen lassen sich den Unteransprüchen, der Beschreibung sowie den Zeichnungen entnehmen.

Insbesondere wird die Aufgabe gelöst durch eine Erdungsschelle zum Befestigen und elektrischen Kontaktieren von zumindest zwei Kabeln an einer separaten Oberfläche. Die Erdungsschelle weist eine Platte mit einer ersten Längskante und einer, der ersten Längskante gegenüberliegenden, zweiten Längskante, auf, wobei sich beide Längskanten in einer ersten Richtung der Platte erstrecken. Und die Platte weist eine erste Querkante und eine, der ersten Querkante gegenüberliegende, zweite Querkante auf, wobei sich beide Querkanten senkrecht zur ersten und zweiten Längskante in einer zweiten Richtung der Platte erstrecken. Weiterhin weist die Erdungsschelle einen ersten Kabelbefestigungsbereich, zum Befestigen und elektrischen Kontaktieren eines ersten Kabels an der Platte, auf, wobei sich der erste Kabelbefestigungsbereich entlang der ersten Querkante erstreckt, und einen zweiten Kabelbefestigungsbereich, zum Befestigen und elektrischen Kontaktieren eines zweiten Kabels an der Platte, wobei sich der zweite Kabelbefestigungsbereich entlang der zweiten Querkante erstreckt. Weiter eine zwischen dem ersten und zweiten Kabelbefestigungsbereich angeordnete Öffnung, zum Einführen eines Befestigungsmittels, einen Steg, der sich von der ersten oder zweiten Längskante in der zweiten Richtung erstreckt, so dass der Steg parallel zu dem ersten und/oder zweiten Kabelbefestigungsbereich verläuft, und eine Lasche, die sich an einem freien Ende des Stegs parallel zur ersten und/oder zweiten Längskante und senkrecht zur Plattenebene in Richtung einer Unterseite der Platte erstreckt.

Die Erdungsschelle wird als einstückiges Bauteil gefertigt. Somit können zwei separate Kabel mit nur einer Erdungsschelle befestigt und elektrisch kontaktiert werden. Dies spart Zeit bei der Montage, und die Anzahl der Bauteile ist reduziert gegenüber z.B. einer Anordnung aus zwei Erdungsschellen für jeweils ein Kabel. Die beiden Kabel werden bei der Erdungsschelle weiterhin in einem Abstand, der im Wesentlichen einer Seitenlänge der Erdungsschelle entspricht, gehalten. Durch diesen Abstand werden ungewollte Verwicklungen der beiden Kabel vermieden. Außerdem werden die beiden Kabel in Kabelbefestigungsbereichen aufgenommen. Für eine vereinfachte Kabelaufnahme, weisen die Kabelbefestigungsbereiche bevorzugt jeweils eine Kabelführung und zumindest zwei U-förmige bzw. V-förmige Aufnahmebereiche aus jeweils zumindest zwei Crimplaschen, auf. Die Aufnahmebereiche mit jeweils zumindest zwei Crimplaschen sind auch die Crimpbereiche zur Befestigung der Kabel an der Erdungsschelle.

Die Öffnung in der Platte der Erdungsschelle ermöglicht das Ein- bzw. Durchführen eines Befestigungsmittels, wie einer Schraube oder eines Bolzens. Über das Befestigungsmittel kann die Erdungsschelle einfach, schnell und sicher an einer separaten Oberfläche befestigt werden. Da die Öffnung in der Mitte zwischen den beiden Kabelbefestigungsbereichen liegt, haben ungewollt auftretende Drehmomente, z.B. aufgrund von Zugkräften an den Kabeln, nur kurze Hebelarme und sind daher weniger wirkungsvoll, als bei einer Öffnung, die entfernt von den Kabelbefestigungsbereichen angeordnet ist.

Der Steg erstreckt sich sichtbar von der Platte weg und gibt der Erdungsschelle eine deutlich sichtbare Orientierung. Die sichtbare Orientierung erleichtert das Ausrichten der Erdungsschelle bei der Montage. Der Steg erstreckt sich dabei in Richtung der Kabelbefestigungsbereiche, d.h. auch in Richtung der zu befestigenden Kabel. Insbesondere liegt der Steg parallel zu den Kabelbefestigungsbereichen und der zu befestigenden Kabel. Werden an der Erdungsschelle befestigte Kabel in ihrer Längsrichtung mit Zug- oder Druckkräften beaufschlagt, so bilden diese ungewollten Kräfte, durch die parallele Ausrichtung der Kabel mit dem Steg, jedoch keine Drehmomente auf den Steg. Dies verbessert die Befestigung der Erdungsschelle an einer separaten Oberfläche. Insbesondere liegt der Steg unter bzw. zwischen den zu befestigenden Kabeln, was eine platzsparende Anordnung bildet.

Die Lasche steht in Richtung der Unterseite der Platte, insbesondere senkrecht, ab. Bei der Montage wird die Lasche mit einer entsprechenden Aussparung oder Öffnung in der separaten Oberfläche, auf der die Erdungsschelle befestigt werden soll, in Eingriff gebracht. Die Tiefe der Lasche ist so ausgebildet, dass die Lasche sicher in die Aussparung oder Öffnung eingreift, und nicht zum Beispiel durch ein Verdrehen oder leichtes Bewegen der Erdungsschelle wieder herausspringt. Die Lasche ist nach der Montage verdrehsicher, bevorzugt schlüssig, in der Aussparung angeordnet, so dass die Lasche im montierten Zustand einen Verdrehschutz für die Erdungsschelle bildet.

Optional weist der Steg zumindest eine Vertiefung auf. Die Vertiefung erhöht die Stabilität des Stegs. Somit kann der Steg bei gleicher Stabilität dünner gefertigt werden, was zumindest Material und Gewicht einspart. Insbesondere beim Festziehen eines Befestigungsmittels, wie einer Mutter, an der Erdungsschelle, wird durch die Vertiefung eine ungewollte Verformung des Stegs durch Drehmomente auf die Erdungsschelle vermieden.

Optional erstreckt sich die Vertiefung in der zweiten Richtung auf mindestens der Hälfte einer Steglänge, bevorzugt mindestens ¾ der Steglänge und noch bevorzugter mindestens 7/8 der Steglänge. Je länger sich die Vertiefung entlang des Stegs erstreckt, desto höher ist die Stabilität durch die Vertiefung. In einer alternativen Ausführungsform weist der Steg eine Vielzahl von kleineren bzw. kürzeren Vertiefungen über die Steglänge auf.

Optional weist der Steg eine rechteckige Form auf. Die rechteckige Form über die gesamte Steglänge erhöht die Stabilität gegenüber Formen, bei denen z.B. eine Stegbreite variiert bzw. mit der Steglänge zum freien Ende hin abnimmt.

Optional verläuft die Lasche über eine gesamte Breite des Stegs. Dadurch weist die Lasche eine breite Verbindung zum Steg auf, was die Verbindung stabil macht. Weiterhin erhält die Lasche durch die breite Verbindung eine möglichst lange erste Seitenfläche, was insgesamt zu einer größeren Auflagefläche führt. Eine große Auflagefläche vereinfacht die Montage und führt zu einer besseren Kräfteverteilung, was die Haltbarkeit der Erdungsschelle erhöht.

Optional beträgt eine Tiefe der Lasche mehr als 1/8 einer Steglänge, bevorzugt mehr als ¼ einer Steglänge und noch bevorzugter mehr als ½ einer Steglänge. Insbesondere ist die Tiefe der Lasche größer als eine maximale Tiefe der Vertiefung auf dem Steg, damit die Lasche sicher in die Aussparung oder Öffnung der separaten Oberfläche eingreifen kann. Je größer die Auflagefläche der Lasche, desto besser ist die Kräfteverteilung und desto länger ist die Haltbarkeit der Erdungsschelle.

Optional ist die eine Öffnung kreisförmig. Dadurch, dass die Befestigung der Erdungsschelle mit der separaten Oberfläche über eine kreisförmige Öffnung erreicht wird, kann die Erdungsschelle in einem ersten Montageschritt auf ein Befestigungsmittel, wie einen Bolzen, aufgesetzt werden, und dadurch in einem Punkt (vor-) fixiert sein. In einem weiteren Montageschritt kann die Erdungsschelle auf dem Bolzen gedreht werden, bis die Lasche in die entsprechende Öffnung auf der separaten Oberfläche eingebracht werden kann. Die erste Fixierung der Erdungsschelle erleichtert die endgültige Montage.

Optional entspricht ein Durchmesser der Öffnung 6/10, bevorzugt 7/10, noch bevorzugter 8/10, der Stegbreite. Je größer die Öffnung für das Befestigungsmittel ist, desto größer kann das Befestigungsmittel gewählt werden. Ein größeres Befestigungsmittel führt zu einer stabileren und/oder haltbareren Befestigung der Erdungsschelle. Dadurch, dass die Öffnung für das Befestigungsmittel in einem Bereich zwischen den beiden Kabelbefestigungsbereichen, und nicht auf dem Steg, angeordnet ist, ist ein vergleichsweise großer Durchmesser der Öffnung in Bezug auf die Stegbreite möglich. Die Stabilität des Stegs wird durch den Durchmesser der Öffnung nicht beeinflusst.

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, insofern sich die Merkmale nicht widersprechen. Die folgende Beschreibung der bevorzugten Ausführungsformen erfolgt dabei unter Bezugnahme auf die begleitenden Zeichnungen. Dabei zeigt:
- Fig. 1: eine isometrische Ansicht einer ersten Ausführungsform der Erdungsschelle;
- Fig. 2: eine Draufsicht auf die erste Ausführungsform der Erdungsschelle;
- Fig. 3: eine Seitenansicht der ersten Ausführungsform der Erdungsschelle entlang einer ersten Richtung;
- Fig. 4: eine Seitenansicht der ersten Ausführungsform der Erdungsschelle entlang einer zweiten Richtung; und
- Fig. 5: eine Darstellung der ersten Ausführungsform der Erdungsschelle im montierten Zustand.

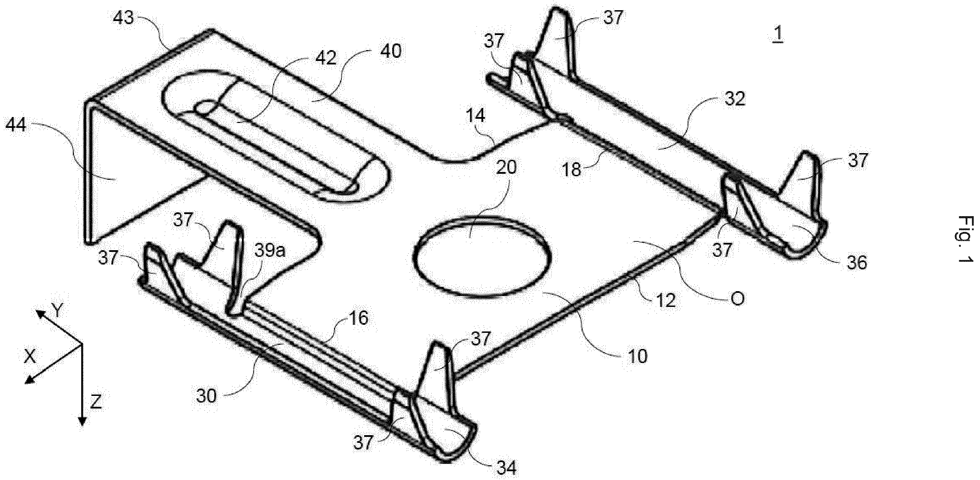

Fig. 1 zeigt eine erste Ausführungsform der Erdungsschelle 1. Die Erdungsschelle 1 weist eine rechteckige Platte 10 mit einer ersten und einer zweiten Längskante 12, 14 in einer ersten Richtung, d.h. Längsrichtung, X , und einer ersten und einer zweiten Querkante 16, 18 in einer zweiten Richtung, d.h. Querrichtung, Y, senkrecht zur Längsrichtung X, auf. Die Kanten 12, 14, 16, 18 der Platte 10 sind ohne die Kabelbefestigungsbereiche 30, 32 betrachtet. In einer anderen Ausführungsform kann die Platte 10 auch eine quadratische Form aufweisen.

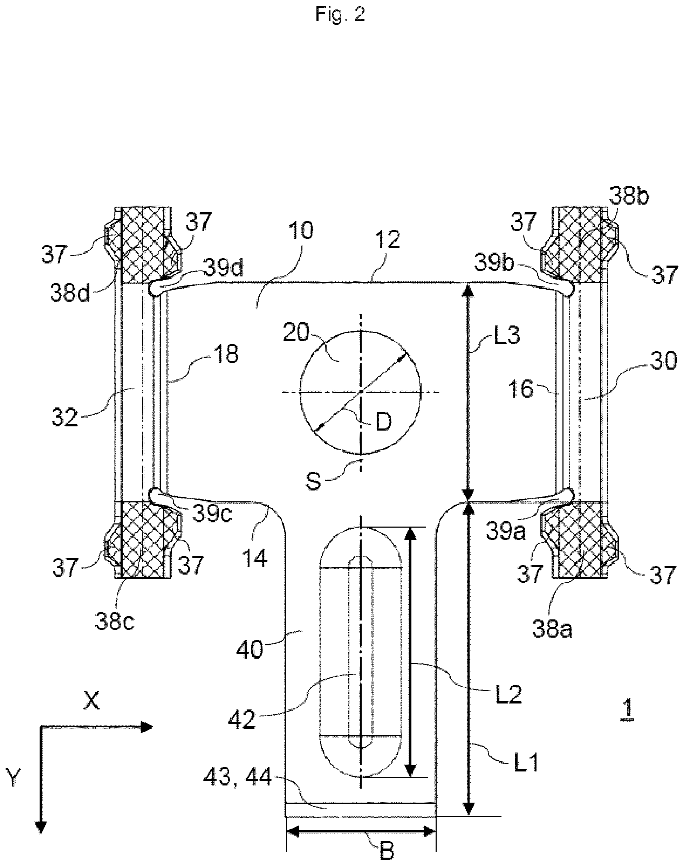

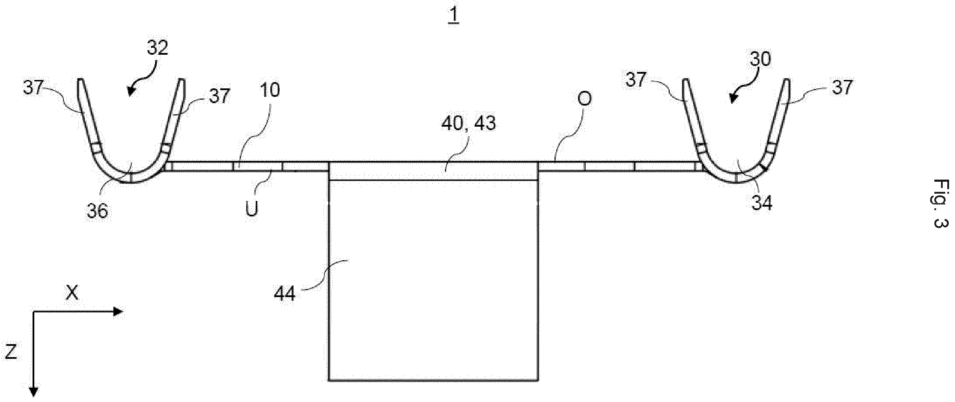

Die Erdungsschelle 1 ist eingerichtet, je ein Kabel, bevorzugt Koaxialkabel, in jeweils einem Kabelbefestigungsbereich 30, 32 aufzunehmen. Der erste bzw. zweite Kabelbefestigungsbereich 30, 32 erstreckt sich jeweils entlang der ersten bzw. zweiten Querkante 16, 18 der Platte 10. An jedem Ende eines Kabelbefestigungsbereichs 30, 32 in Querrichtung Y ist ein Crimpbereich 38a, b, c oder d angeordnet (vgl. Fig. 2). Zum Befestigen eines Kabels an der Erdungsschelle 1 wird das Kabel in dem ersten oder zweiten Kabelbefestigungsbereich 30, 32 ausgerichtet. Eine erste bzw. zweite Kabelführung 34, 36 vereinfacht dabei die Anordnung des Kabels. Weiterhin weisen die Crimpbereiche 38a, b, c, d eine U-förmige bzw. V-förmige Verjüngung zur Kabelführung 34, 36 des jeweiligen ersten oder zweiten Kabelbefestigungsbereichs 30, 32 auf (vgl. Fig. 3). Die Verjüngung ist in jedem Crimpbereich 38a, b, c, d durch zumindest zwei gegenüberliegenden Crimplaschen 37 gebildet. Eine Länge der Crimplaschen 37 ist bevorzugt an die Kabeldicke angepasst. Je dicker das zumindest eine zu befestigende Kabel ist, desto länger sind die entsprechenden Crimplaschen 37 ausgebildet. Zur Befestigung eines Kabels werden die Crimplaschen 37 beider Crimpbereiche 38a, b bzw. 38c, d zur Kabelmitte hin umgebogen und das Kabel wird mit den Crimplaschen 37 vercrimpt. Bevorzugt weisen die Crimpbereiche 38a, b, c, d eine strukturierte Oberfläche auf, um eine bessere, insbesondere haltbarere, Befestigung beim Crimpen zu erreichen. Durch das Crimpen ist das Kabel fest mit der Erdungsschelle 1 verbunden. Die vercrimpten Crimplaschen 37 können weiterhin einen direkten Kontakt zu einer Masseleitung des Kabels aufweisen. Bevorzugt wurde für diesen direkten Kontakt die Masseleitung des Kabels in den Crimpbereichen 38a, b bzw. 38c, d abisoliert. Der direkte Kontakt führt zu einer elektrischen Verbindung von Masseleitung des Kabels und der Erdungsschelle 1.

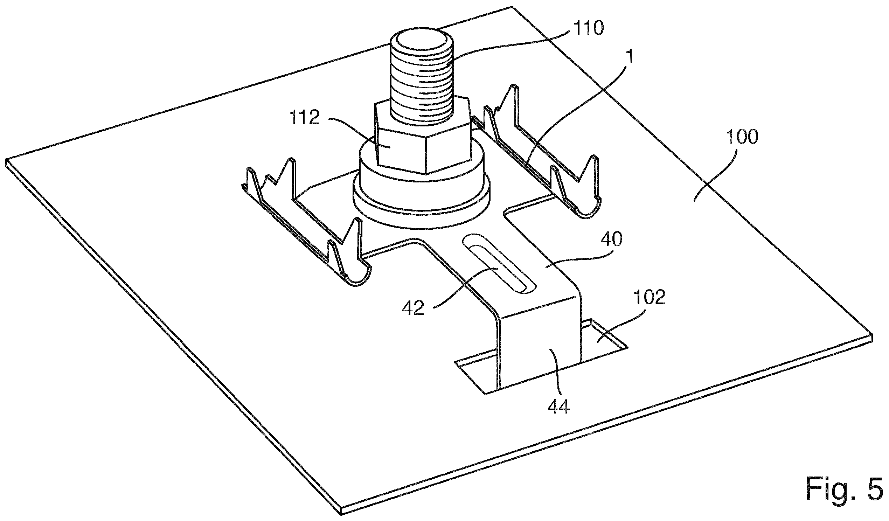

Weiterhin kann die Erdungsschelle 1 über ein Befestigungsmittel 110, wie eine Schraube oder einen Bolzen, das durch die Öffnung 20 auf der Platte 10 geführt wird, an einem separaten Körper bzw. einer Oberfläche 100 befestigt werden (vgl. Fig. 5). Das Befestigungsmittel 110 ist dabei, wie die Erdungsschelle 1, bevorzugt elektrisch leitfähig und insbesondere aus Metall. Durch die elektrische Leitfähigkeit der Bauteile kann eine elektrische Verbindung zwischen den an der Erdungsschelle 1 befestigten Kabeln, insbesondere den Masseleitungen der Kabel, und der Oberfläche 100, auf der die Erdungsschelle 1 befestigt ist, hergestellt werden.

Die dargestellte Ausführungsform der Erdungsschelle 1 weist weiterhin an der zweiten Längskante 14 einen Steg 40 auf, der sich in Querrichtung Y von der Platte 10 weg erstreckt. In einer alternativen Ausführungsform kann sich der Steg 40 von der ersten Längskante 12 weg erstrecken. Der Steg 40 ist einstückig mit der Platte 10 ausgebildet. Der Steg 40 weist eine Vertiefung 42 auf, die sich entlang des Stegs 40 in Querrichtung Y erstreckt.

Die Vertiefung 42 ist bevorzugt durch mechanische Verfahren, wie Pressen und/oder Prägen, in den Steg 40 eingebracht. Die genannten oder ähnliche Verfahren ermöglichen eine einfache und preisgünstige Herstellung einer Erdungsschelle 1. Insbesondere ist die Vertiefung 42 eine Verformung und keine Aussparung von Material. Denn Aussparungen von Material insbesondere durch Abtragungen und/oder Öffnungen führen zu einer verminderten Stabilität.

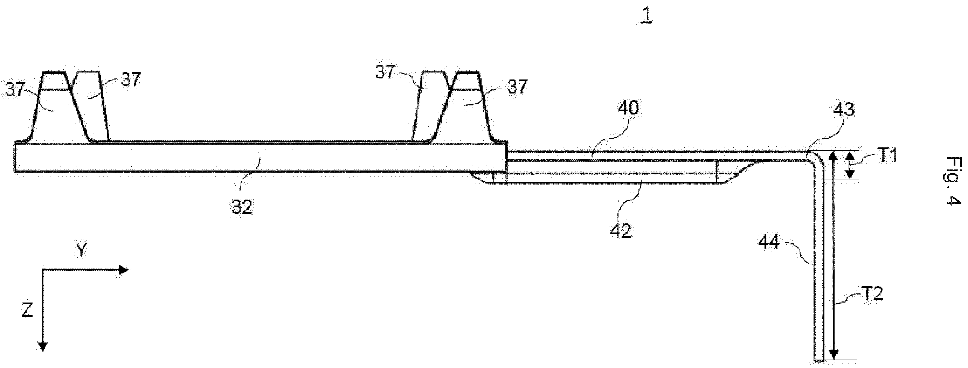

Die Vertiefung 42 weist in einer Ausführungsform eine Tiefe T1 von gleich oder weniger als 1,4 mm in einer Richtung Z zur Unterseite U der Platte 10 auf (vgl. Fig. 4). Die Vertiefung 42 weist bevorzugt eine ovale, schalenförmige Form auf, um scharfe Kanten zu vermeiden. Scharfe Kanten bilden ein Verletzungsrisiko bei der Montage. In einer anderen Ausführungsform können anstelle einer Vertiefung 42 mit einer Länge L2 wie in Fig. 1 und Fig. 2 dargestellt, auch mehrere, kleinere, Vertiefungen entlang des Stegs 40, bevorzugt auf der Länge L2, angeordnet sein, um die Stabilität des Stegs 40 zu erhöhen. In einer alternativen Ausführungsform kann die Vertiefung 42 kürzer als die Länge L2 sein, sofern der Steg 40 stabil gegen ein Verdrehen und/oder Verformen bleibt.

Der Steg 40 weist, an seiner der Platte 10 abgewandten Seite, ein freies Ende 43 auf. Das freie Ende 43 bildet eine Kante des Stegs 40, an die sich eine Lasche 44 anschließt. Die Lasche 44 erstreckt sich, um eine Tiefe T2, in Richtung Z zur Unterseite U der Platte 10, bevorzugt senkrecht (vgl. Fig. 4). Bevorzugt ist die Lasche 44 durch Umbiegen des Stegs 40 an seinem freien Ende 43 gebildet. Die Lasche 44 ist insbesondere einstückig mit dem Steg 40 und der Platte 10 ausgebildet.

Weiterhin wurde von den Erfindern erkannt, dass sich die Steifigkeit des Stegs 40 bei einer größeren Länge L2 und/oder größeren Tiefe T1 der Vertiefung 42 erhöht. In einer alternativen Ausführungsform erstreckt sich die Vertiefung 42 um das freie Ende 43 herum weiter auf die Lasche 44. Bei dieser alternativen Ausführungsform weist neben dem Steg 40 auch die Lasche 44 die Vertiefung 42 auf. Die Vertiefung 42 auf der Lasche 44 erhöht die Stabilität der Lasche 44, insbesondere gegen ein Verdrehen und/oder Verformen.

Fig. 2 zeigt eine Draufsicht auf die erste Ausführungsform der Erdungsschelle 1. Die Erdungsschelle 1 ist symmetrisch zu einer Spiegelachse S ausgebildet. Die Spiegelachse S verläuft durch den Mittelpunkt der Öffnung 20 und ist parallel zu den beiden Querkanten 16, 18. Durch den symmetrischen Aufbau verlaufen die beiden Kabelbefestigungsbereiche 30, 32 parallel zueinander in einem Abstand, der der Länge der ersten bzw. zweiten Längskante 12, 14 entspricht. Durch den symmetrischen Aufbau der Erdungsschelle 1 werden Drehmomente ausgeglichen bzw. verhindert, die auftreten können, wenn Zugkräfte an den Kabeln wirken und/oder der Abstand zwischen jedem Kabel und der Öffnung 20 unterschiedlich ist.

Fig. 2 zeigt weiterhin einen Versatz von gegenüberliegenden Crimplaschen 37. Dieser Versatz verbessert das Ergebnis beim Crimpen und stärkt die Befestigung der Kabel an der Erdungsschelle 1. Insbesondere verbessert eine Freimachung 39a, b, c, d in dem jeweiligen Crimpbereich 38a, b, c, d das Ergebnis des Crimpens, da ein Fließen des Materials beim Crimpvorgang ermöglicht wird.

Die Öffnung 20 weist einen Durchmesser D auf. Der Durchmesser D ist an das zu verwendende Befestigungsmittel 110 angepasst und nimmt das Befestigungsmittel 110 bevorzugt radial abschließend auf. Ein größerer Durchmesser D ermöglich das Einführen eines dickeren Befestigungsmittels 110, was bei gleicher Beschaffenheit stabiler ist. Der Durchmesser D beträgt weiterhin 6/10, bevorzugt 7/10, noch bevorzugter 8/10 einer Breite B des Stegs 40. In einer bevorzugten Ausführungsform beträgt der Durchmesser D 7,2 mm und die Stegbreite B 9 mm. Wäre die Öffnung 20 bei den gerade genannten Abmessungen symmetrisch auf dem Steg 40 angeordnet, würde sich der Steg 40 in zwei gegenüberliegenden Bereichen der Öffnung auf jeweils 0,9 mm reduzieren. Insbesondere in diesen Bereichen wäre die Stabilität des Stegs 40 stark verringert, und eine Verformung und/oder Schädigung des Stegs 40 wäre bei auftretenden Kräften bzw. Drehmomenten sehr wahrscheinlich.

Der Steg 40 weist weiterhin eine Länge L1 auf, mit der der Steg 40 von der zweiten Längskante 14 in Querrichtung Y absteht. Die Steglänge L1 ist bevorzugt gleich oder größer einer Länge L3 der ersten und/oder zweiten Querkante 16, 18. Durch die Größe der Steglänge L1 ist die Erdungsschelle 1 gut am Steg 40 greifbar, was die Montage vereinfacht. Die Steglänge L1 ist weiterhin größer als die Länge L2 der Vertiefung 42 auf dem Steg.

Fig. 3 zeigt eine Seitenansicht der ersten Ausführungsform der Erdungsschelle 1, in der die Lasche 44 gut sichtbar ist. Die Lasche 44 weist in der dargestellten Ausführungsform eine rechteckige, insbesondere quadratische, Form auf. Die Lasche 44 ist gut visuell und haptisch erkennbar, was bei der Montage der Erdungsschelle 1 von Vorteil ist.

Der erste und zweite Kabelbefestigungsbereich 30, 32 in Fig. 3 weist einen U-förmigen bzw. V-förmigen Querschnitt auf. Die Schenkel der U- bzw. V-Form werden von den jeweils zumindest zwei benachbarten Crimplaschen 37 in einem Crimpbereich 38a, b, c, d gebildet. Ein Verbindungstück zwischen jeweils benachbarten Crimplaschen 37 auf Höhe der Platte 10 bildet eine Kabelführung 34, 36 in Form einer Rinne. Die Rinne erleichtert die Kabelanordnung. Die Kabelführung 34, 36 in Form einer Rinne verbindet in jedem Kabelbefestigungsbereich 30, 32 die jeweils zwei Crimpbereiche 38a, b bzw. 38c, d miteinander (vgl. Fig. 4).

Fig. 5 zeigt die erste Ausführungsform der Erdungsschelle 1 im montierten Zustand. Dabei ist die Erdungsschelle 1 auf einem Bolzen bzw. Gewindebolzen 110 angeordnet und mit einer Mutter 112 auf dem Gewindebolzen 110 fixiert. Der Gewindebolzen 110 ist fest mit einer separaten Oberfläche 100, wie einer Fahrzeugkarosserie, verbunden. In der separaten Oberfläche 100 ist vom Gewindebolzen beabstandet eine Aussparung 102 angeordnet. Die Aussparung 102 ist in einer Ausführungsform eine Öffnung. In einer anderen Ausführungsform kann die Aussparung 102 eine Vertiefung sein, um die Lasche 44 verdrehsicher in Eingriff zu bringen. Im montierten Zustand befindet sich die Lasche 44 verdrehsicher mit der Aussparung 102 in Eingriff. Insbesondere greift die Lasche 44 mit mehr als 1/8, bevorzugt mehr als 1/4, noch bevorzugter mehr als ½ seiner Tiefe T2 in die Aussparung ein, um einen sicheren Halt zu erreichen. Die Aussparung 102 umschließt die Lasche 44 bevorzugt. In einer Ausführungsform kann ein Spiel zwischen Lasche 44 und Aussparung 102 gebildet sein, in einer alternativen Ausführungsform umschließt die Aussparung 102 die Lasche 44 bündig.

Die Erdungsschelle 1 ist bevorzugt aus einem leichten Material, insbesondere aus einem Leichtmetall, gefertigt.

### BEZUGSZEICHENLISTE

- 1: Erdungsschelle
- 10: Platte
- 12: erste Längskante
- 14: zweite Längskante
- 16: erste Querkante
- 18: zweite Querkante
- 20: Öffnung
- 30: erster Kabelbefestigungsbereich
- 32: zweiter Kabelbefestigungsbereich
- 34: erste Kabelführung
- 36: zweite Kabelführung
- 37: Crimplaschen
- 38a, b, c, d: erster, zweiter, dritter, vierter Crimpbereich
- 39a, b, c, d: erste, zweite, dritte, vierte Freimachung
- 40: Steg
- 42: Vertiefung
- 43: freies Ende
- 44: Lasche
- 100: separate Oberfläche
- 102: Aussparung
- 110: Bolzen
- 112: Mutter
- B: Breite
- D: Durchmesser
- L1: Steglänge
- L2: Länge der Vertiefung
- L3: Länge der ersten und/oder zweiten Querkante
- O: Oberseite
- S: Spiegelachse
- T1: Tiefe der Vertiefung
- T2: Tiefe der Lasche
- U: Unterseite
- X: erste Richtung, Längsrichtung
- Y: zweite Richtung, Querrichtung
- Z: Richtung zur Unterseite der Platte

## Patentansprüche

1. Erdungsschelle (1), zum Befestigen und elektrischen Kontaktieren von zumindest zwei Kabeln an einer separaten Oberfläche (100), aufweisend:
eine Platte (10) mit einer ersten Längskante (12) und einer, der ersten Längskante (12) gegenüberliegenden, zweiten Längskante (14), wobei sich beide Längskanten (12, 14) in einer ersten Richtung (X) der Platte (10) erstrecken, und einer ersten Querkante (16) und einer, der ersten Querkante (16) gegenüberliegenden, zweiten Querkante (18), wobei sich beide Querkanten (16, 18) senkrecht zur ersten und zweiten Längskante (12, 14) in einer zweiten Richtung (Y) der Platte (10) erstrecken;
einen ersten Kabelbefestigungsbereich (30) zum Befestigen und elektrischen Kontaktieren eines ersten Kabels an der Platte (10), wobei sich der erste Kabelbefestigungsbereich (30) entlang der ersten Querkante (16) erstreckt;
einen zweiten Kabelbefestigungsbereich (32) zum Befestigen und elektrischen Kontaktieren eines zweiten Kabels an der Platte (10), wobei sich der zweite Kabelbefestigungsbereich (32) entlang der zweiten Querkante (18) erstreckt;
eine zwischen dem ersten und zweiten Kabelbefestigungsbereich (30, 32) angeordnete Öffnung (20) zum Einführen eines Befestigungsmittels (110); dadurch gegenzeichnet, dass die Erdungsschelle als einstückiges Bauteil gefertigt wird und ferner umfasst einen Steg (40), der sich von der ersten oder zweiten Längskante (12, 14) in der zweiten Richtung (Y) erstreckt, so dass der Steg (40) parallel zu dem ersten und/oder zweiten Kabelbefestigungsbereich (30, 32) verläuft; und
eine Lasche (44), die sich an einem freien Ende (43) des Stegs (40) parallel zur ersten und/oder zweiten Längskante (12, 14) und senkrecht zur Plattenebene in Richtung (Z) einer Unterseite (U) der Platte (10) erstreckt.

2. Erdungsschelle (1) nach Anspruch 1, bei der der Steg (40) zumindest eine Vertiefung (42) aufweist.

3. Erdungsschelle (1) nach Anspruch 2, bei der sich die Vertiefung (42) in der zweiten Richtung (Y) auf mindestens der Hälfte einer Steglänge (L1), bevorzugt mindestens ¾ der Steglänge (L1) und noch bevorzugter mindestens 7/8 der Steglänge (L1), erstreckt.

4. Erdungsschelle (1) nach einem der Ansprüche 1 bis 3, bei der der Steg (40) eine rechteckige Form aufweist.

5. Erdungsschelle (1) nach Anspruch 4, bei der die Lasche (44) über eine gesamte Breite (B) des Stegs (40) verläuft.

6. Erdungsschelle (1) nach einem der Ansprüche 1 bis 5, bei der eine Tiefe (T2) der Lasche (44) mehr als 1/8 einer Steglänge (L1), bevorzugt mehr als ¼ einer Steglänge (L1) und noch bevorzugter mehr als ½ einer Steglänge (L1) beträgt.

7. Erdungsschelle (1) nach einem der Ansprüche 1 bis 6, bei der die eine Öffnung (20) kreisförmig ist.

8. Erdungsschelle (1) nach einem der Ansprüche 1 bis 7, bei der ein Durchmesser (D) der Öffnung (20) 6/10, bevorzugt 7/10, noch bevorzugter 8/10, der Stegbreite (B) entspricht.

## Claims

1. Grounding clamp (1) for fastening and electrically contacting at least two cables on a separate surface (100), having:
a plate (10) having a first longitudinal edge (12) and a second longitudinal edge (14) opposite the first longitudinal edge (12), wherein both longitudinal edges (12, 14) extend in a first direction (X) of the plate (10), and a first transverse edge (16) and a second transverse edge (18) opposite the first transverse edge (16), wherein both transverse edges (16, 18) extend perpendicularly to the first and the second longitudinal edge (12, 14) in a second direction (Y) of the plate (10);
a first cable fastening region (30) for fastening and electrically contacting a first cable on the plate (10), wherein the first cable fastening region (30) extends along the first transverse edge (16);
a second cable fastening region (32) for fastening and electrically contacting a second cable on the plate (10), wherein the second cable fastening region (32) extends along the second transverse edge (18);
an opening (20), disposed between the first and second cable fastening regions (30, 32), for introducing a fastening means (110); **characterized in that** the grounding clamp is made as an integral component and furthermore comprises a web (40) extending from the first or the second longitudinal edge (12, 14) in the second direction (Y) in such a way that the web (40) runs parallel to the first and/or the second cable fastening region (30, 32); and
a tab (44) which extends on a free end (43) of the web (40) so as to be parallel to the first and/or the second longitudinal edge (12, 14) and perpendicular to the plane of the plate in the direction (Z) of a lower side (U) of the plate (10).

2. Grounding clamp (1) according to Claim 1, wherein the web (40) has at least one depression (42).

3. Grounding clamp (1) according to Claim 2, wherein the depression (42) extends in the second direction (Y) to at least half of a web length (L1), preferably at least ¾ of the web length (L1) and even more preferably at least 7/8 of the web length (L1).

4. Grounding clamp (1) according to one of Claims 1 to 3, wherein the web (40) has a rectangular shape.

5. Grounding clamp (1) according to Claim 4, wherein the tab (44) runs over a complete width (B) of the web (40).

6. Grounding clamp (1) according to one of Claims 1 to 5, wherein a depth (T2) of the tab (44) is more than 1/8 of a web length (L1), preferably more than ¼ of a web length (L1) and more preferably more than ½ of a web length (L1).

7. Grounding clamp (1) according to one of Claims 1 to 6, in which the one opening (20) is circular.

8. Grounding clamp (1) according to one of Claims 1 to 7, wherein a diameter (D) of the opening (20) corresponds to 6/10, preferably 7/10, even more preferably 8/10, of the web width (B).

## Revendications

1. Collier de mise à la terre (1) pour fixer et mettre en contact électrique au moins deux câbles sur une surface séparée (100), présentant :
une plaque (10) avec un premier bord longitudinal (12) et un deuxième bord longitudinal (14) opposé au premier bord longitudinal (12), les deux bords longitudinaux (12, 14) s'étendant dans une première direction (X) de la plaque (10), et un premier bord transversal (16) et un deuxième bord transversal (18) opposé au premier bord transversal (16), les deux bords transversaux (16, 18) s'étendant perpendiculairement aux premier et deuxième bords longitudinaux (12, 14) dans une deuxième direction (Y) de la plaque (10) ;
une première zone de fixation de câble (30) pour fixer et mettre en contact électrique un premier câble sur la plaque (10), la première zone de fixation de câble (30) s'étendant le long du premier bord transversal (16) ;
une deuxième zone de fixation de câble (32) pour fixer et mettre en contact électrique un deuxième câble sur la plaque (10), la deuxième zone de fixation de câble (32) s'étendant le long du deuxième bord transversal (18) ;
une ouverture (20) agencée entre la première et la deuxième zone de fixation de câble (30, 32) pour l'introduction d'un moyen de fixation (110) ; **caractérisé en ce que** le collier de mise à la terre est fabriqué sous forme de composant monobloc et comprend en outre une entretoise (40) qui s'étend depuis le premier ou le deuxième bord longitudinal (12, 14) dans la deuxième direction (Y), de telle sorte que l'entretoise (40) s'étend parallèlement à la première et/ou à la deuxième zone de fixation de câble (30, 32) ; et
une languette (44) qui s'étend à une extrémité libre (43) de l'entretoise (40) parallèlement au premier et/ou au deuxième bord longitudinal (12, 14) et perpendiculairement au plan de la plaque dans la direction (Z) d'un côté inférieur (U) de la plaque (10).

2. Collier de mise à la terre (1) selon la revendication 1, dans lequel l'entretoise (40) présente au moins un renfoncement (42).

3. Collier de mise à la terre (1) selon la revendication 2, dans lequel le renfoncement (42) s'étend dans la deuxième direction (Y) sur au moins la moitié d'une longueur d'entretoise (L1), de préférence au moins les ¾ de la longueur d'entretoise (L1) et de manière encore davantage préférée au moins les 7/8 de la longueur d'entretoise (L1).

4. Collier de mise à la terre (1) selon l'une quelconque des revendications 1 à 3, dans lequel l'entretoise (40) présente une forme rectangulaire.

5. Collier de mise à la terre (1) selon la revendication 4, dans lequel la languette (44) s'étend sur une largeur totale (B) de l'entretoise (40).

6. Collier de mise à la terre (1) selon l'une quelconque des revendications 1 à 5, dans lequel la profondeur (T2) de la languette (44) est supérieure à 1/8 d'une longueur d'entretoise (L1), de préférence supérieure à ¼ d'une longueur d'entretoise (L1) et de manière encore davantage préférée supérieure à ½ d'une longueur d'entretoise (L1).

7. Collier de mise à la terre (1) selon l'une quelconque des revendications 1 à 6, dans lequel l'ouverture (20) est circulaire.

8. Collier de mise à la terre (1) selon l'une quelconque des revendications 1 à 7, dans lequel le diamètre (D) de l'ouverture (20) correspond à 6/10, de préférence 7/10, et de manière encore davantage préférée 8/10 de la largeur d'entretoise (B).
